# EUROPEAN PATENT APPLICATION

(11) **EP 2 503 173 A1**
(43) Date of publication of application: **26.09.2012**
(21) Application number: 10831485.7
(22) Date of filing: 09.11.2010
(51) Int. Cl.: F16D 28/00

(54) **CLUTCH ACTUATOR**

(30) Priority: 19.11.2009 JP 2009263940
(71) Applicant: Aisin Seiki Kabushiki Kaisha, Aichi 448-8650 (JP); Aisin AW Co., Ltd., Anjo-shi, Aichi 444-1192 (JP); AISIN AI Co., Ltd., Nishio-shi, Aichi 445-0006 (JP)
(72) Inventor: NAKANE, Yasuhiro, Kariya-shi Aichi 448-8650 (JP); KAZAOKA, Masumi, Kariya-shi Aichi 448-8650 (JP); MORI, Kyosuke, Kariya-shi Aichi 448-8650 (JP); HASHIZUME, Takeshi, Kariya-shi Aichi 448-8650 (JP)
(74) Representative: Kramer - Barske - Schmidtchen
(86) International application number: PCT/JP2010/069936
(87) International publication number: WO 2011/062090

(57) **Abstract**

A clutch actuator capable of reducing the load applied to a power source is disclosed. The clutch actuator includes a power source, and a screw member rotated by power of rotation output from the power source and transmitted to the screw member. The clutch actuator also includes a nut member which, through rotation of the screw member, is moved along a direction of an axis of rotation of the screw member, and an output rod slidably carried by a pre-set member (e.g., a housing). The output rod performs a stroke movement by movement of the nut member and engages/ disengages a clutch by the stroke movement (Fig.1).

## Description

### TECHNICAL FIELD

### [Reference to related application]

The present application claims priority right based on JP Patent Application 2009-263940 filed in Japan on November 19, 2009, the entire disclosure contents thereof being incorporated by reference into the present Application.
This invention relates to a clutch actuator that fully or semi-fully engages/ disengages a clutch.

### BACKGROUND ART

There has so far been known a system in which an actuator is provided in a pre-existing manual transmission to permit automatically performing a sequence of gear change operations, such as clutch engagement/ disengagement, gear shift or gear selection, subject to a driver's intention or depending on vehicle states. In such system, a clutch actuator that fully or semi-fully engages/ disengages the clutch is provided with a power source, such as an electric motor, and an output rod, in order to change the position of a diaphragm spring, for example, of the clutch. The stroke movement of the output rod is in need of a large force, leading to an increased size if a power supply source that develops a large power is used. Thus, in the conventional clutch actuator, a worm gear assembly including a worm and a worm wheel is used for speed reduction on a motive power transmission path between the power source and the output rod. It is intended in this manner to suppress the driving power of the power source needed and to self-hold the stroke position even if the power source is in a non-conductive (off) state.

Patent Literature 1 (PTL 1) shows, as a clutch actuator of the conventional technique, such a clutch actuator including a power source, a rotor (worm) rotationally driven by the power source, a driven rotor (worm wheel) connected to and rotated in unison with the rotor, and an output rod connected to the driven rotor for rotation relative to the driven rotor. The clutch may be fully or semi-fully engaged or disengaged as a result of movement of the output rod. A connecting member is arranged between the rotor and the driven rotor. The rotor and the driven rotor are not arranged in the same plane. An assist spring, having one end supported by the housing, assists rotation of the driven rotor. In this clutch actuator, the output rod is connected to the driven rotor by having an end connected for rotation at a position radially offset from the rotational axis of the driven rotor (worm wheel). The output rod performs a stroke movement by exploiting the circumferential displacement of the connected portion.

Patent Literature 2 (PTL 2) shows a clutch actuator in which a cam surface is provided at a preset position on the peripheral surface of a worm wheel, and a roll that may perform a rolling movement on the cam surface is mounted for rotation at the end of an output rod. The roll has its rotational axis pivotally mounted at the foremost part of a lever in turn pivotally mounted to the housing. In this clutch actuator, the output rod may perform a stroke movement by exploiting position movement of the roll in accordance to the circumferential movement of the cam surface.

### CITATION LIST

### PATENT LITERATURE

PTL 1: JP Patent Kokai Publication JP2004-301238A
PTL 2: German Patent Laid-Open DE 19723394A (Fig.17)

### SUMMARY OF INVENTION

### TECHNICAL PROBLEM

The entire contents of disclosure of the above Patent Literatures PTL 1 and 2 are incorporated by reference into the present application. The following analysis is given by the present invention.

In the clutch actuator shown in Patent Literature PTL 1, the end of the output rod is connected for rotation at a position radially offset from the rotational axis of the driven rotor (worm wheel), and hence the rotational axis of the worm wheel is not located at all times on an extended line of the center axis of the output rod. Thus, if the rotational axis of the worm wheel is offset from the extended line of the center axis of the output rod, there is generated a torque in a direction to push back the worm wheel, that is, in the direction of reverse rotation, due to a load applied to the output rod (push-back load). This increases a load applied to the power source and hence power consumption.

In the clutch actuator shown in Patent Literature PTL 2, the roll is displaced by swiveling movement of a lever and by circumferential movement of a cam surface of the worm wheel. Hence, the rotational axis of the worm wheel is not always located on the extended line of the output rod, such that there is generated a torque in a direction in which the load acting on the output rod (push-back load) will push back the worm wheel, that is, in a direction of reverse rotation. This increases the load on the power source and hence the power consumption.

It is a principal object of the present invention to provide a clutch actuator capable of reducing the load applied to the power source.

### SOLUTION TO PROBLEM

A clutch actuator according to the present invention includes a power source, and a screw member rotated by power of rotation that is output from the power source to be transmitted to the screw member. The clutch actuator also includes a nut member which, through rotation of the screw member, is displaced along a direction of an axis of rotation of the screw member, and an output rod slidably carried by a pre-set member. The output rod performs a stroke movement by displacement of the nut member and engages/ disengages a clutch by the stroke movement.

The clutch actuator according to the present invention preferably further includes a constant velocity joint that interconnects an output shaft of the power source and the screw member so that the output shaft and the screw member is displaceable each other and incapable of rotating relative to each other.

The clutch actuator according to the present invention further includes a single-stage or multi-stage speed reduction mechanism that transmits the power of rotation output from the power source to the screw member under speed reduction.

In the clutch actuator according to the present invention, the speed reduction mechanism preferably includes a drive gear rotated in unison with the output shaft of the power source, and a driven gear meshing with the drive gear. Preferably, the driven gear is larger in diameter than the drive gear and rotates in unison with the screw member.

The clutch actuator according to the present invention preferably further includes a housing that rotationally holds the screw member. Meritorious effect of the invention

According to the present invention, in which the load acting on the output rod may be sustained by a bearing of the axle of rotation of the worm wheel or the gear member, the torque acting in the direction of pushing back the worm wheel or the gear member, that is, in the direction of reverse rotation, may be reduced. Hence, the onus to the power source may be reduced to save the power.

### BRIEF DESCRIPTION OF THE DRAWINGS

Fig.1 is a schematic cross-sectional view showing the configuration of a clutch actuator according to Example 1 of the present invention.
Fig.2 is a schematic cross-sectional view taken along line X-X' of Fig.1 and schematically showing the configuration of the clutch actuator according to Example 1 of the present invention.
Fig.3 is a cross-sectional view schematically showing the clutch actuator according to Example 2 of the present invention.
Fig.4 is a cross-sectional view taken along line X-X' of Example 2 of the present invention and schematically showing the clutch actuator according to Example 2 of the present invention.

### DESCRIPTION OF EMBODIMENTS

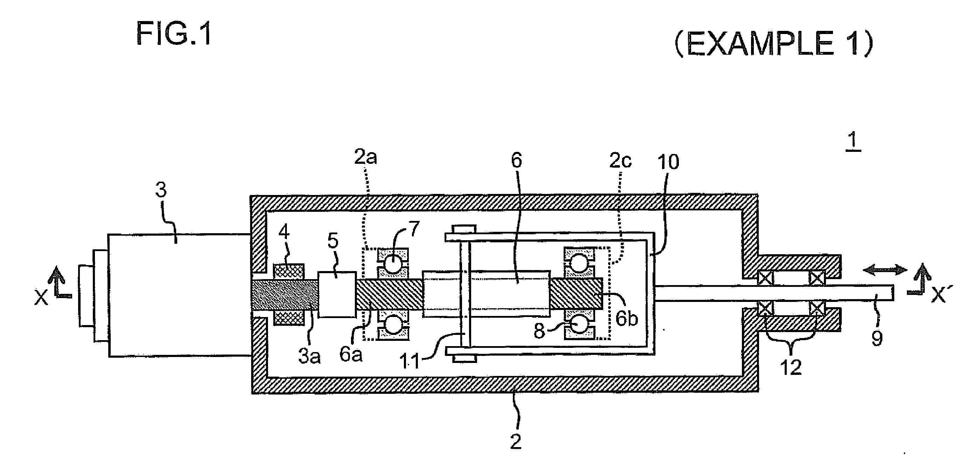

A clutch actuator according to an exemplary embodiment of the present invention includes a power source (3 of Fig.1), and a screw member (6 of Fig.1) rotated by power of rotation output from the power source and transmitted to the screw member. The clutch actuator also includes a nut member (11 of Fig.1) which, through rotation of the screw member, is displaced along a direction of an axis of rotation of the screw member, and an output rod (9 of Fig.1) slidably carried by a pre-set member (for example, a housing 2 of Fig.1). The output rod performs a stroke movement by displacement of the nut member and engages/ disengages a clutch by the stroke movement.

It should be noted that reference numerals to the drawings are for assisting the understanding and are not intended to limit the present invention to the specified modes illustrated in the drawings.

### Example 1

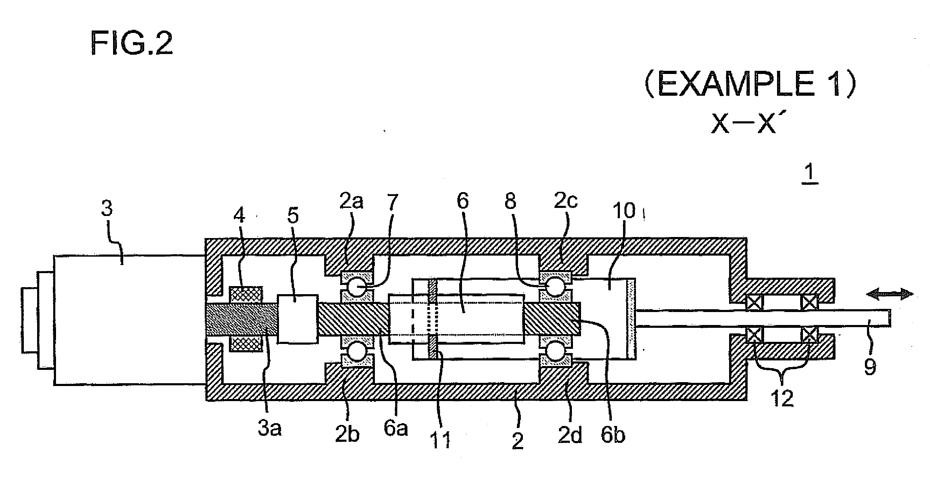

A clutch actuator according to Example 1 of the present invention will now be described with reference to the drawings. Fig.1 depicts a cross-sectional view schematically showing a clutch actuator 1 according to Example 1 of the present invention. Fig.2 is a cross-sectional view, taken along line X-X' of Fig.1, and schematically shows the configuration of the clutch actuator 1 according to Example 1 of the present invention.

The clutch actuator 1 is an electrically driven actuator that causes reciprocating movement of the output rod 9 to fully or semi-fully disengage/ disengage a clutch, not shown. The clutch actuator actuates the clutch to change the state of engagement under driving control by an electronic controller, not shown. The clutch being semi-fully engaged denotes a state in which a clutch engagement operation is commenced and the clutch has not as yet been completely engaged. The clutch actuator 1 of Figs.1 and 2 is used for a clutch of the type in which the load is applied by the output rod 9 in a direction of outwardly pushing a target or object under actuation, that is, towards right, or in a direction of inwardly pulling the target or object under actuation, that is, towards left, in Fig.1. The target or object under actuation denotes a release fork if the clutch is of the mechanical system, and denotes a hydraulic piston if the clutch is of the hydraulic system. The clutch actuator 1 includes, as principal components, a housing 2, an electric motor 3, a rotation sensor 4, a constant velocity joint 5, a screw member 6, bearings 7, 8, an output rod 9, a holding member 10, a nut member 11 and bushes 12.

The housing 2 is a component in which to accommodate components provided on a motive power transmitting path from an output shaft 3a of the electric motor 3 to the output rod 9. The housing 2 may be combined from a plurality of members, and is secured to suitable location in a vehicle. The electric motor 3 is mounted on the housing 2 in such a way that a main body member of the motor 3 is arranged outside and the foremost part of the output shaft 3a of the motor 3 is arranged within the housing 2. The housing 2 has a through-hole, not shown, through which the output shaft 3a is extended at a pre-set clearance. The housing 2 includes retention members 2a, 2b for rotationally carrying the screw member 6 (a shaft part 6a) via bearing 7. An outer race of the bearing 7 is secured to the retention members 2a, 2b to sustain the load which tends to cause the bearing 7 to be moved towards the electric motor 3. The housing 2 includes retention members 2c, 2d for rotationally retaining the screw member 6 (shaft part 6b) via a bearing 8. An outer race of the bearing 8 is secured to the retention members 2c, 2d to sustain the load which tends to cause the bearing 8 to be moved towards the rod 9. The retention members 2a through to 2d are formed so as not to interfere with the holding member 10. The housing 2 carries the output rod 9 via bushes 12 so that the output rod 9 is able to perform a stroke movement.

The electric motor 3 is a power source for direct current driving, and rotationally drives the output shaft 3a in both the forward and reverse directions under control by an electronic controller, not shown. The electric motor 3 is mounted on the housing 2 so that its output shaft 3a will be aligned with the center axis of the output rod 9. A rotation sensor 4 is mounted on the output shaft 3a. The foremost part of the output shaft 3 is connected via a constant velocity joint 5 to the shaft part 6a of the screw member 6. Even if the output shaft 3a has been displaced or offset with respect to the shaft part 6a of the screw member 6, such offset state is made up for by the constant velocity joint 5 so that the output shaft 3a is able to rotate in synchronism with the rotation of the screw member 6.

The rotation sensor 4 is a sensor for detecting the angle of rotation of the output shaft 3a of the electric motor 3, and is accommodated within the housing 2. The rotation sensor 4 outputs a signal corresponding to the detected angle of rotation to the electronic controller, not shown. It should be noted that the electronic controller is responsive to the control signal corresponding to the angle of rotation from the rotation sensor 4 to control the electric motor 3, based on a map or a program, so that the output rod 9 will get to the preset stroke position.

The constant velocity joint 5 interconnects the output shaft 3a of the electric motor 3 to the shaft part 6a of the screw member 6 such as to permit relative displacement (offsetting) therebetween, and is accommodated within the housing 2. The constant velocity joint 5 transmits the power of rotation of the output shaft 3a to the shaft part 6a in a manner such that relative rotation therebetween is blocked. The constant velocity joint 5 may be made extensible or contractible in a direction along the axis of the output shaft 3a of the electric motor 3.

The screw member 6 is a pillar-like member having a threaded surface (female-threaded surface) on a part of its outer peripheral surface, and is accommodated within the housing 2. The screw member 6 is threadedly engaged with the nut member 11 for rotation relative thereto. When the screw member 6 is turned in a forward direction, it causes the nut member 11 to be moved in one of the directions along its axis of rotation, that is, in a direction towards the bearing 7. When the screw member 6 is rotated in reverse, it causes the nut member 11 to be moved in the other of the directions along its axis of rotation, that is, in a direction towards the bearing 8. The screw member 6 includes, in addition to the shaft part 6a, another shaft part 6b on its side opposite to the side carrying the shaft part 6a. These shaft parts 6a, 6b are devoid of threaded surfaces. Preferably, the center axis of the screw member 6 is located on an extended line of the output rod 9. The shaft part 6a, extending towards the electric motor 3, is to operate as an axle of rotation of the screw member 6. The shaft part 6a is secured to an inner race of the bearing 7 so that relative rotation therebetween is not possible. That is, the shaft part 6a is carried for rotation relative to the retention members 2a, 2b of the housing 2 via bearing 7. The foremost part of the shaft part 6a is coupled via the constant velocity joint 5 to the output shaft 3a of the electric motor 3. The shaft part 6b, extending towards the output rod 9, operates as an axle of rotation of the screw member 6. The shaft part 6b is secured to an inner race of the bearing 8 in a manner so that relative rotation therebetween is not possible. That is, the shaft part 6b is carried for rotation relative to the retention members 2c, 2d of the housing 2 via bearing 8.

The bearing 7 rotationally carries the shaft part 6a of the screw member 6, and is mounted on the housing 2. The bearing 7 may be a ball bearing including a plurality of balls arranged between its inner and outer races. The inner race of the bearing 7 is secured to the shaft part 6a of the screw member 6 so that relative rotation therebetween is not possible. The outer race of the bearing 7 is secured to the retention members 2a, 2b of the housing 2.

The bearing 8 rotationally carries the shaft part 6b of the screw member 6, and is mounted on the housing 2. The bearing 8 may be a ball bearing including a plurality of balls arranged between its inner and outer races. The inner race of the bearing 8 is secured to the shaft part 6b of the screw member 6 so that relative rotation therebetween is not possible. The outer race of the bearing 8 is secured to the retention members 2c, 2d of the housing 2.

The output rod 9 is a bar-shaped member that fully or semi-fully engages or disengages a clutch by a stroke movement. The foremost part of the output rod 9 is protruded to outside the housing 2 to push or pull a target or an object that is under actuation. This target or object under actuation denotes a release fork if the clutch is of the mechanical system, and denotes a hydraulic piston if the clutch is of the hydraulic system. The output rod 9 has a mid part carried by the housing 2 via bushes 12 so that the output rod is able to perform a stroke movement. The output rod 9 has its terminal portion accommodated within the housing 2, and the holding member 10 is secured to en extreme end of the terminal portion. The nut member 11 is mounted via the holding member 10 to the output rod 9 so that the output rod 9 will be able to perform a stroke movement in unison with the holding member 10 and the nut member 11. The output rod 9 is preferably so set that an extended line of its center axis will be aligned with the center axes of the screw member 6 and the output shaft 3a. With rotation of the screw member 6, the output rod 9 performs a stroke movement via the nut member 11 and the holding member 10.

The holding member 10 is a member that is secured to the output rod 9 and that operates to hold the nut member 11. The holding member 10 is accommodated within the housing 2. The holding member 10 is formed so as not to interfere with the bearings 7, 8 or with the retention members 2a to 2d of the housing 1.

The nut member 11 is a member that includes a threaded surface (female threaded surface) on its inner periphery and is accommodated within the housing 2. The nut member 11 is threadedly engaged with the screw member 6 for rotation relative thereto. When the screw member 6 is rotated in a forward direction, the nut member 11 is moved in one direction along the rotational axis of the screw member 6 or towards the bearing 7. When the screw member 6 is rotated in reverse, the nut member 11 is moved in the other direction along the rotational axis of the screw member or towards the bearing 8. The nut member 11 is secured to the holding member in a manner such that relative rotation therebetween is not possible.

The bushes 12 are members that carry the output rod 9 in a manner such that the output rod is able to perform a stroke movement in a direction along its center axis. The bushes are carried within the housing 2.

The operation of the clutch actuator of Example 1 of the present invention will now be explained.

When the output rod 9 is to be pulled inwards, the output shaft 3a of the electric motor 3 is rotated in the forward direction. The power of rotation of the output shaft 3a is then transmitted via the constant velocity joint 5 to the screw member 6. By rotation of the screw member 6 in the forward direction, the nut member 11 is moved towards the bearing 7. By movement of the nut member 11, the output rod 9 is pulled towards the electric motor 3 via the holding member 10. The output rod 9 pulls the target or object under actuation which is the release fork if the clutch is of the mechanical system and which is a hydraulic piston if the clutch is of the hydraulic system. At this time, the output rod 9 may have to sustain a load (pull-back load) from the target or object under actuation. However, this pull-back load is sustained by the vehicle via the output rod 9, holding member 10, nut member 11, screw member 6, bearing 8 and the housing 2. Thus, the pull-back load, if any, is not applied to the electric motor 3, such that power consumption may not be increased.

When the output rod 9 is to be pushed outwards, the output shaft 3a of the electric motor 3 is rotated in reverse. The power of rotation of the output shaft 3a is then transmitted via the constant velocity joint 5 to the screw member 6. By rotation of the screw member 6 in reverse, the nut member 11 is moved towards the bearing 8. By movement of the nut member 11, the output rod 9 is pushed outwards via the holding member 10. The output rod 9 pushes the target or object under actuation which is the release fork if the clutch is of the mechanical system and which is a hydraulic piston if the clutch is of the hydraulic system. At this time, the output rod 9 may have to sustain a load (push-back load) from the target or object under actuation. However, this push-back load is sustained by the vehicle via the output rod 9, holding member 10, nut member 11, screw member 6, bearing 7 and the housing 2. Thus, the push-back load, if any, is not applied to the electric motor 3, such that power consumption may not be increased.

In Example 1, even if the output rod 9 is to sustain the pull-back load or the push-back load from the target or object under actuation, such pull-back or push-back load may be sustained by the vehicle via the output rod 9, holding member 10, nut member 11, screw member 6, bearing 7 or 8 by the housing 2. Since no torque is generated in a direction to reverse the direction of rotation of the output shaft 3a of the electric motor 3, no load may be applied to the electric motor 3, thus saving the power.
On the other hand, the fact that the pull-back load or the push-back load is sustained by the housing 2 is beneficial in selecting the values of strength of the electric motor 3 and the rotation sensor 4. Moreover, since the rotational axis of the output shaft 3a of the electric motor 3 may be co-axially aligned with that of the screw member 6, the number of the bearings used may be lesser than that in a conventional system including a slide gear speed reduction mechanism composed of a worm and a worm wheel on a motion transmission path from the electric motor to the output rod. This may lead to a reduced size of the clutch actuator.

### Example 2

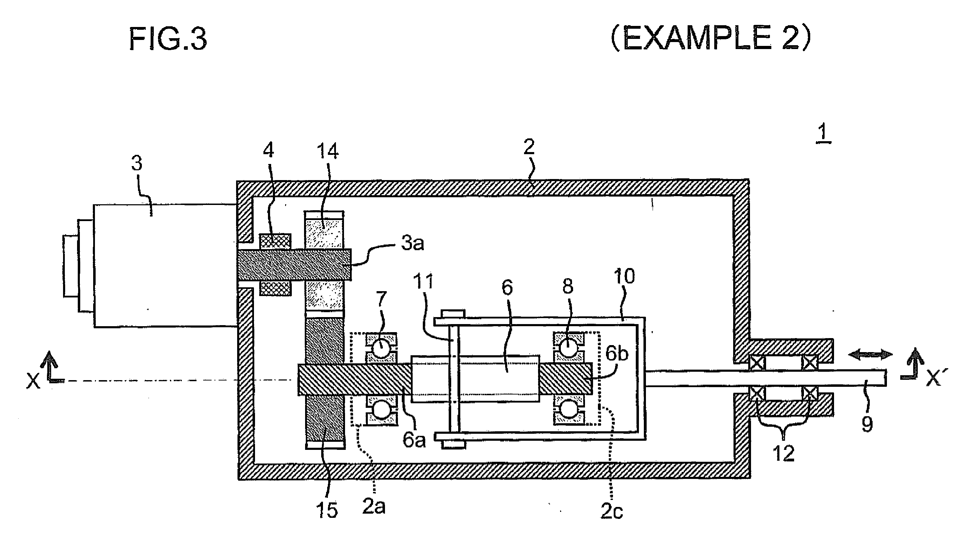

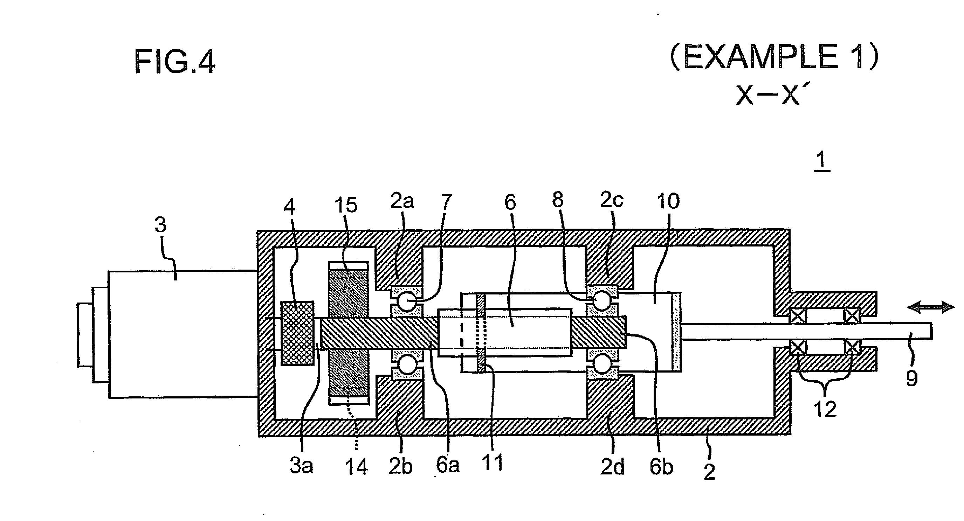

A clutch actuator according to Example 2 of the clutch actuator according to the present invention will now be explained with reference to the drawings. Fig.3 depicts a cross-sectional view schematically showing the configuration of a clutch actuator according to Example 2 of the present invention. Fig.4 is a cross-sectional view taken along line X-X' of Fig.3 and schematically showing the configuration of the clutch actuator of Example 2.

Example 2 is a modification of Example 1. In Example 2, the constant velocity joint (5 of Fig.1) provided in Example 1 between the output shaft 3a of the electric motor 3 and the shaft part 6a of the screw member 6 is not provided. Instead, there is provided in Example 2 a speed reduction mechanism composed of a pinion 14 and a driven gear 15. The present Example is otherwise similar in its configuration to Example 1.

The pinion 14, a gear connected to the output shaft 3a of the electric motor 3, is a component of the speed reduction mechanism. The pinion 14 is accommodated in the housing 2, and is driven for rotation by the output shaft 3a of the electric motor 3. The pinion 14 meshes with the driven gear 15. On the outer peripheral surface of the pinion 14, there is formed, for example, a spur gear, a helical gear or a double-helical gear. The pinion 14 is of a radius smaller than that of the driven gear 15.

The driven gear 15, meshing with the pinion 14, is a component part of the speed reduction mechanism, and is accommodated within the housing 2. The driven gear 15 is secured to the shaft part 6a of the screw member 6 in a manner such that relative rotation therebetween is inhibited. The driven gear 15 is rotationally carried by the housing 2 via the screw member 6 and the bearings 7, 8. On the outer peripheral surface of the driven gear 15, there is formed, for example, a spur gear, a helical gear or a double-helical gear. The driven gear 15 is of a radius smaller than that of the pinion 14.

The operation of the clutch actuator of Example 2 of the present invention will now be explained.

When the output rod 9 is to be pulled inwards, the output shaft 3a of the electric motor 3 is driven for rotation in the forward direction. The power of rotation of the output shaft 3a is then transmitted via the pinion gear 14 and the driven gear 15 to the screw member 6 under speed reduction. By rotation of the screw member 6 in the forward direction, the nut member 11 is moved towards the bearing 7. By movement of the nut member 11, the output rod 9 is pulled towards the electric motor 3 via the holding member 10. The output rod 9 pulls the target or object which is the release fork if the clutch is of the mechanical system and which is a hydraulic piston if the clutch is of the hydraulic system. At this time, the output rod 9 may have to sustain a load (pull-back load) from the target or object under actuation. However, this pull-back load is sustained by the vehicle via the output rod 9, holding member 10, nut member 11, screw member 6, bearing 8 and the housing 2. Thus, the pull-back load, if any, is not applied to the electric motor 3, such that power consumption may not be increased.

When the output rod 9 is to be pushed outwards, the output shaft 3a of the electric motor 3 is driven for rotation in reverse. The power of rotation of the output shaft 3a is then transmitted to the screw member 6 under speed reduction by the pinion 14 and the driven gear 15. By rotation of the screw member 6 in reverse, the nut member 11 is moved towards the bearing 8. By movement of the nut member 11, the output rod 9 is pushed out via the holding member 10. The output rod 9 pushes the target or object which is the release fork if the clutch is of the mechanical system and which is a hydraulic piston if the clutch is of the hydraulic system. At this time, the output rod 9 may have to sustain a load (push-back load) from the target or object under actuation. However, this push-back load is sustained by the vehicle via the output rod 9, holding member 10, nut member 11, screw member 6, bearing 7 and the housing 2. Thus, the push-back load, if any, is not applied to the electric motor 3, such that power consumption may not be increased.

In Example 2, the same beneficial results may be obtained. In addition, the reduction mechanism composed of the pinion gear 14 and the driven gear 15 is provided on the motive power transmitting path between the output shaft 3a of the electric motor 3 and the shaft part 6a of the screw member 6 to enable the output shaft 3a of the electric motor 3 to be offset relative to the shaft part of the screw member 6. The actuator may be reduced in its length along the axial direction, while a high speed reduction ratio may be realized. In addition, a clutch cover with a larger actuating power for high engine torque may be coped with.

The disclosures of the aforementioned Non-Patent Literatures are incorporated herein by reference. The particular exemplary embodiments or examples may be modified or adjusted within the ambit of the entire disclosure of the present invention, inclusive of claims, based on the fundamental technical concept of the invention. In addition, a variety of combinations or selection of elements disclosed herein may be made within the context of the claims. That is, the present invention may cover a wide variety of modifications or corrections that may occur to those skilled in the art in accordance with the entire disclosure of the present invention, inclusive of claims, and the technical concept of the present invention.

### [Explanation of reference numerals]

- 1: clutch actuator
- 2: housing
- 2a, 2b, 2c, 2d: retention members
- 3: electric motor (power source)
- 3a: output shaft
- 4: rotation sensor
- 5: constant velocity joint
- 6: screw member
- 6a, 6b: shaft parts
- 7, 8: bearings
- 9: output rod
- 10: holding member
- 11: nut member
- 12: bushes
- 14: pinion (drive gear)
- 15: driven gear

## Claims

1. A clutch actuator comprising
a power source;
a screw member rotated by power of rotation that is output from the power source to be transmitted to the screw member;
a nut member which, through rotation of the screw member, is displaced along a direction of an axis of rotation of the screw member; and
an output rod slidably carried by a pre-set member; the output rod performing a stroke movement by displacement of the nut member and engaging/ disengaging a clutch by the stroke movement.

2. The clutch actuator according to claim 1, further comprising
a constant velocity joint that interconnects an output shaft of the power source and the screw member so that the output shaft and the screw member is displaceable each other and incapable of rotating relative to each other.

3. The clutch actuator according to claim 1 or 2, further comprising
a single-stage or multi-stage speed reduction mechanism that transmits the power of rotation output from the power source to the screw member under speed reduction.

4. The clutch actuator according to claim 3, wherein,
the speed reduction mechanism includes
a drive gear rotated in unison with the output shaft of the power source; and
a driven gear meshing with the drive gear; the driven gear being larger in diameter than the drive gear and rotating in unison with the screw member.

5. The clutch actuator according to any one of claims 1 to 4, further comprising
a housing that rotationally holds the screw member.
